# EUROPEAN PATENT APPLICATION

(11) **EP 4 830 891 A1**
(43) Date of publication of application: **28.10.2026**
(21) Application number: 26172506.3
(22) Date of filing: 15.04.2026
(51) Int. Cl.: B27B 9/04, B23D 47/02, B23Q 9/00, B25H 1/00

(54) **GUIDE TRACK FOR POWER TOOL**

(30) Priority: 25.04.2025 US 202519189776
(71) Applicant: Black & Decker, Inc., New Britain, CT 06053 (US)
(72) Inventor: JIANHUI, Jack Jiang, Suzhou 215021 (CN); TATE, Clare, Newton Aycliffe DL5 4NT (GB); FANWEN, Gong, Suzhou 215021 (CN)
(74) Representative: SBD IPAdmin

(57) **Abstract**

Guide tracks and power tools such as circular saws, track saws, or plunge saws, for use with the guide tracks. A guide track may include a rail configured and dimensioned to slidably engage a channel in a footplate of a circular saw for guiding the circular saw in a linear direction. A guide track may include a first portion having a first width that extends from a first side of the guide track to the rail. A guide track may include a second portion having a second width that is different than the first width and that extends from a second side of the guide track to the rail.

## Description

This relates to guide tracks and power tools such as circular saws, track saws, or plunge saws, for use with the guide tracks.

Power tools such as circular saws, track saws, or plunge saws and the like can be used with a guide track for guiding the power tool along the guide track during a cutting operation of a workpiece.

### SUMMARY

In some aspects, the techniques described herein relate to a guide track, including: a rail configured and dimensioned to slidably engage a channel in a footplate of a power tool for guiding the power tool in a linear direction; a first portion having a first width that extends from a first side of the guide track to the rail; and a second portion having a second width that extends from a second side of the guide track to the rail; wherein: the first width is configured to position a saw blade of the power tool adjacent the first side of the guide track when the power tool is in a first cut orientation and positioned on the first portion of the guide track; and the second width is less than the first width and is configured to position the saw blade adjacent the second side of the guide track when the power tool is in a second cut orientation and is positioned on the second portion of the guide track.

In some aspects, the techniques described herein relate to a guide track, wherein the first cut orientation is an orthogonal cut orientation and the second cut orientation is a bevel cut orientation.

In some aspects, the techniques described herein relate to a guide track, wherein the rail is a single rail on the guide track and the guide track is configured to guide a saw with a footplate with only one channel.

In some aspects, the techniques described herein relate to a guide track, wherein the rail, the first portion, and the second portion are a unitary member.

In some aspects, the techniques described herein relate to a guide track, wherein the rail is fixed and is not adjustable.

In some aspects, the techniques described herein relate to a guide track, wherein a ratio of a width to a height of the rail is between approximately 2 and approximately 2.5.

In some aspects, the techniques described herein relate to a system, including: a power tool that includes: a rotary saw blade; a footplate that includes a channel that extends along a length of the footplate; and an angle adjustment assembly for adjusting an angle of the footplate with respect to the rotary saw blade between a first cut orientation and a second cut orientation that is different than the first cut orientation; and a guide track that includes: a rail configured and dimensioned to slidably engage the channel; a first portion having a first width that extends from a first side of the guide track to the rail; and a second portion having a second width that extends from a second side of the guide track to the rail; wherein: the first width is configured to position the rotary saw blade adjacent the first side of the guide track when the power tool is in the first cut orientation and positioned on the first portion; and the second width is less than the first width and is configured to position the rotary saw blade adjacent the second side of the guide track when the power tool is in the second cut orientation and positioned on the second portion.

In some aspects, the techniques described herein relate to a system, wherein the first cut orientation is an orthogonal cut orientation and the second cut orientation is a bevel cut orientation.

In some aspects, the techniques described herein relate to a system, wherein the rail is a single rail on the guide track and the channel is the only channel in the footplate for coupling to the rail of the guide track.

In some aspects, the techniques described herein relate to a system, wherein the rail, the first portion, and the second portion are a unitary member.

In some aspects, the techniques described herein relate to a system, wherein the rail is fixed and is not adjustable.

In some aspects, the techniques described herein relate to a system, wherein a ratio of a width to a height of the rail is between approximately 2 and approximately 2.5.

In some aspects, the techniques described herein relate to a system, wherein the rotary saw blade is spaced a first distance from the channel when the power tool is in the first cut orientation and is spaced a second distance from the channel that is less than the first distance when the power tool is in the second cut orientation, wherein the first width of the first portion of the guide track is equal to the first distance minus a first predetermined spacing and the second width of the second portion of the guide track is equal to the second distance minus a second predetermined spacing.

In some aspects, the techniques described herein relate to a system, wherein the first predetermined spacing is between approximately 0.1 mm and approximately 10 mm.

In some aspects, the techniques described herein relate to a method, including: positioning a power tool on a first portion of a guide track when the power tool is in a first cut orientation so that a channel of a footplate of the power tool is slidably disposed on a rail of the guide track and a rotary blade of the guide track is directly adjacent a first side of the guide track; performing a cutting operation by powering the rotary blade and sliding the power tool in a first direction along the first portion of the guide track; positioning the power tool on a second portion of the guide track when the power tool is in a second cut orientation so that the channel of the footplate of the power tool is slidably disposed on the rail of the guide track and the rotary blade of the guide track is directly adjacent a second side of the guide track; and performing a cutting operation by powering the rotary blade and sliding the power tool in a second direction that is opposite the first direction along the second portion of the guide track.

In some aspects, the techniques described herein relate to a method, wherein the first cut orientation is an orthogonal cut orientation and the second cut orientation is a bevel cut orientation.

In some aspects, the techniques described herein relate to a method, wherein the rail is a single rail on the guide track and the channel is the only channel in the footplate for coupling to the rail of the guide track.

In some aspects, the techniques described herein relate to a method, wherein the rail, the first portion, and the second portion are a unitary member.

In some aspects, the techniques described herein relate to a method, wherein the rail is fixed and is not adjustable.

In some aspects, the techniques described herein relate to a method, wherein a ratio of a width to a height of the rail is between approximately 2 and approximately 2.5.

In some aspects, the techniques described herein relate to a method, wherein the first portion is wider than the second portion.

### BRIEF DESCRIPTION OF THE DRAWINGS

FIG. 1A is an isometric view of an example power tool in an orthogonal cut orientation and disposed on a first portion of an example guide track of the present disclosure.
FIG. 1B is an isometric view of the example power tool of FIG. 1A in a bevel cut orientation and disposed on a second portion of the example guide track of FIG. 1A.
FIG. 2 is an isometric view of the power tool of FIGS. 1A and 1B.
FIGS. 3A, 3B, 3C, 3D, and 3E are an isometric view, a rear view, a front view, a bottom view, and a top view, respectively, of the footplate of the power tool of FIGS. 1A-2.
FIG. 4 is an end view of the guide track of FIGS. 1A and 1B.
FIGS. 5A, 5B, and 5C are a top view, an end view, and a detail end view, respectively, of the power tool of FIGS. 1A and 1B in an orthogonal cut orientation and positioned on the guide track of FIGS. 1A and 1B.
FIG. 6A is an isometric view of the power tool and guide track of FIGS. 1A and 1B showing the power tool in a bevel cut orientation.
FIG. 6B is an end view of the power tool and guide track showing the power tool on a second portion of the guide track in an orthogonal cut orientation.
FIGS. 6C and 6D are an end view and detail view thereof of the power tool in a bevel cut orientation and positioned on the second portion of the guide track.
FIG. 7A is an isometric view of the guide track of FIGS. 1A and 1B.
FIGS. 7B, 7C, 7D, and 7E are a top view, bottom view, side view and end view, respectively, thereof.

### DETAILED DESCRIPTION

Aspects of the present disclosure include guide tracks for guiding power tools such as circular saws or track saws as well as power tools equipped with a footplate that is configured for use with the guide track. Footplates and guide tracks of the present disclosure may be designed to improve ease of use and simplicity while maintaining or improving performance and/or improving space efficiency and/or reducing manufacturing costs. In some examples, a guide track may include a channel or rail that is designed and configured to guide a power tool during a cutting operation, for example, a linear cutting operation. In some examples, a guide track may include only one channel or rail. In some examples, a power tool that is designed and configured to be supported and guided by a guide track of the present disclosure includes a footplate that includes only one channel or rail that is sized for sliding engagement with the channel or rail of the guide track.

In some examples, the guide track may have a first side or a first portion for guiding a power tool when the power tool is in a first cut orientation, and a second side or a second portion for guiding the power tool when the power tool is in a second cut orientation. In some examples, a power tool may be placed on a guide track on a first side of the guide track for making a first angle cut, such as an approximately 90° angle cut in a first direction and placed on the guide track on a second, opposite side of the guide track, for making a second angle cut, such as a bevel cut, such as an approximately 45° angle cut, in a second direction that is opposite the first direction.

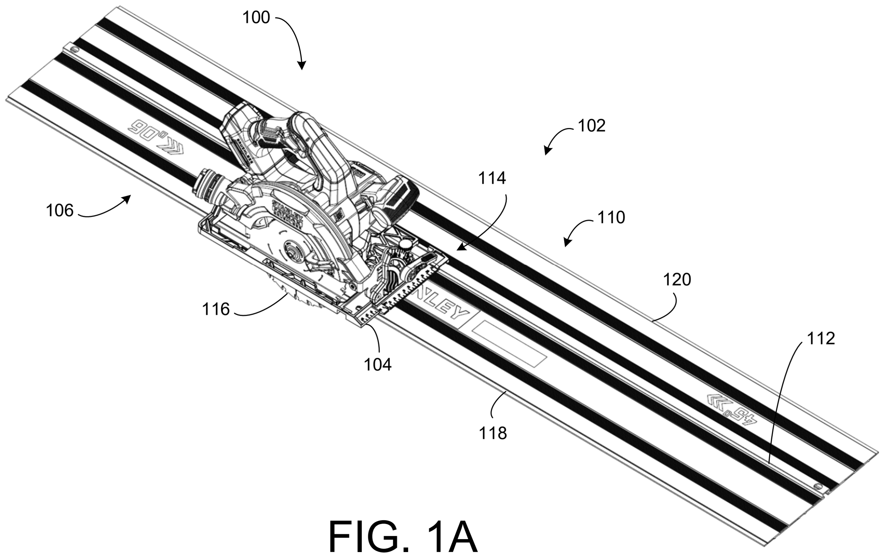

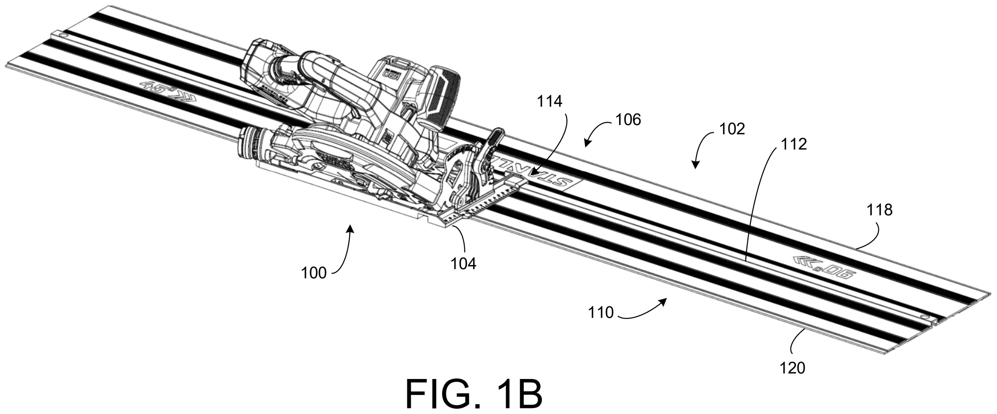

FIG. 1A is an isometric view of an example circular saw 100 that is operably supported by an example guide track 102. The circular saw 100 is in an orthogonal cut orientation and positioned on a first portion 106 of the guide track 102. FIG. 1B is an isometric view of the circular saw 100 in a bevel cut orientation and positioned on a second portion 110 of the guide track 102. The guide track 102 may include a rail 112 that is configured and dimensioned to slidably engage a channel 114 in a footplate 104 of the circular saw 100 for guiding the circular saw 100 in a linear direction along the guide track 102. The first portion 106 may have first width that is configured to position a saw blade 116 of the circular saw 100 directly adjacent a first side 118 of the guide track 102 when the power tool is in a first cut orientation, such as the orthogonal cut orientation shown in FIG. 1A and the circular saw 100 is positioned on the first portion 106 of the guide track 102. The second portion 110 may have second width that is less than the first width of the first portion 106 and that is configured to position the saw blade 116 of the circular saw 100 directly adjacent a second side 120 of the guide track 102 when the circular saw 100 is in a second cut orientation, such as the bevel cut orientation shown in FIG. 1B and the circular saw 100 is positioned on the second portion 110 of the guide track 102.

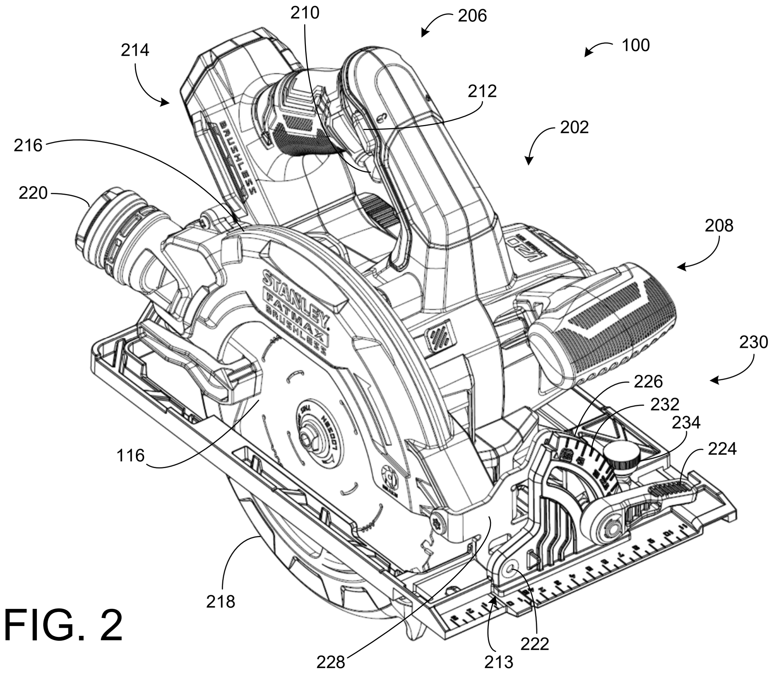

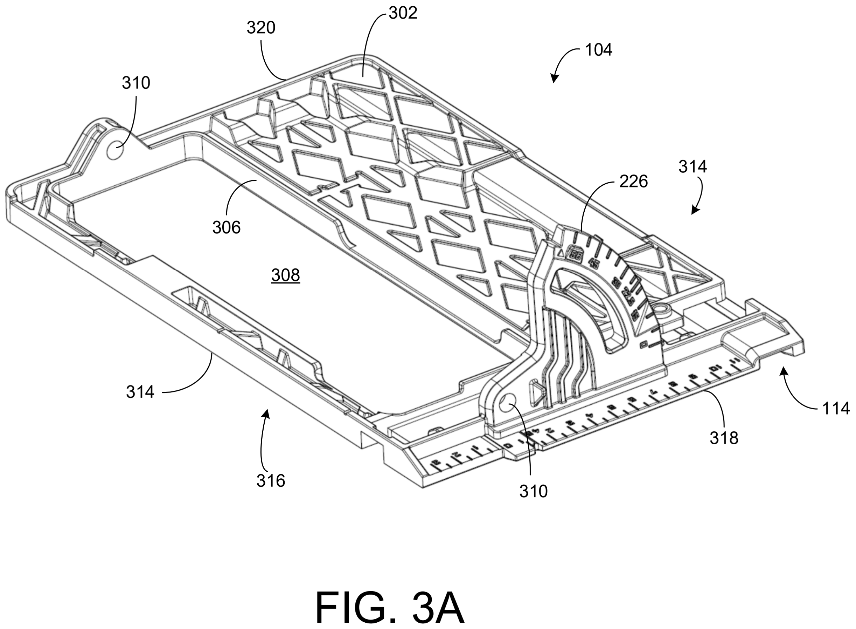

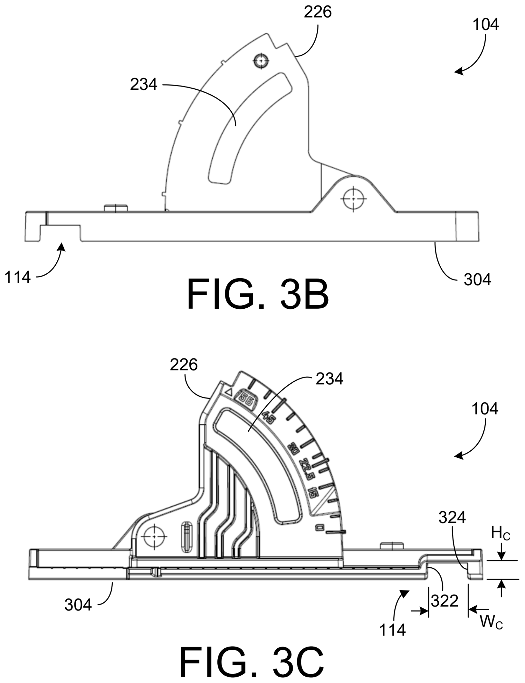

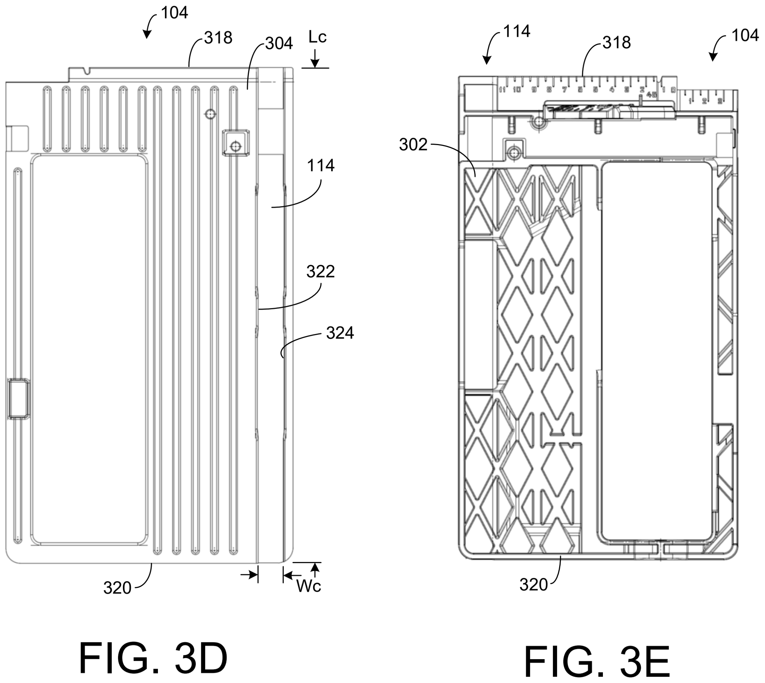

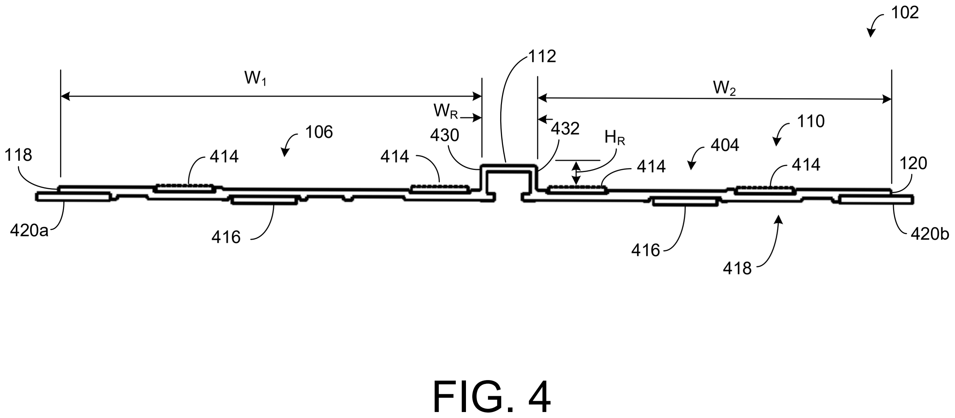

FIG. 2 is an isometric view of the circular saw 100. FIGS. 3A, 3B, 3C, 3D, and 3E are an isometric view, a rear view, a front view, a bottom view, and a top view, respectively, of the footplate 104 of the circular saw 100. FIG. 4 is an end view of the guide track 102.

Referring to FIGS. 2-3E, the example circular saw 100 may be a battery-powered circular saw and includes a housing 202 and the blade 116, e.g., a motor-driven rotary saw blade, partially disposed in the housing. The circular saw 100 also includes a first handle 206 and a second handle 208 for holding and controlling the circular saw 100. The first handle 206 includes a trigger 210 for selectively driving the blade 116 and a control button 212 which may be used, for example, for locking and unlocking the blade 116. In the illustrated example, the circular saw 100 is battery powered and includes a battery pack 214 releasably coupled to the housing 202. The battery pack 214 powers a motor (not illustrated) disposed in the housing 202 which drives the blade 116. The circular saw 100 also includes a fixed upper blade guard 216 and a retractable lower blade guard 218. The fixed upper blade guard 216 may include a dust port 220 for saw dust collection. The circular saw 100 is illustrated by way of example. In other examples, power tools of the present disclosure may include circular saws, track saws, plunge saws, and the like, which may be battery powered or powered via an electrical power cord and an external power source.

As shown in FIGS. 3A-3E, the example footplate 104 includes a top surface 302 and a bottom surface 304, the bottom surface 304 may be designed to provide a support surface for the circular saw 100 during use. When the circular saw 100 is used in conjunction with a guide track such as guide track 102, the bottom surface 304 provides a support surface for sliding engagement with the guide track 102. The footplate 104 includes an inner wall 306 that defines an opening 308 that extends through a thickness of the footplate 104 from the top surface 302 to the bottom surface 304. The opening 308 is configured and dimensioned to enable a portion of the circular saw 100 that includes the blade 116 to be movably disposed therethrough. The opening 308 is located in a second side portion of the footplate 104 adjacent a second side 316 of the footplate 104. In the illustrated example, the inner wall 306 includes first and second openings 310 that are configured to receive pins 222 (FIG. 2) to provide corresponding first and second pivot connections 213 between the footplate 104 and the housing 202 at a front and rear side of the circular saw 100.

Referring to FIGS. 2 and 3A, the circular saw 100 includes an angle adjustment assembly 230 that includes a lever 224, a first plate 226, and a second plate 228. FIG. 2 shows the lever 224 in a locked position in which the first plate 226 and second plate 228 are pulled together to hold the housing 202 and saw blade 116 in a fixed position with respect to the footplate 104. Moving the lever 224 to an unlocked position allows the first plate 226 and second plate 228 to move relative to each other, thereby allowing the footplate 104 to pivot with respect to the blade 116 for adjusting an angle of the blade 116 with respect to the footplate 104. The first plate 226 includes an angle indicator 232 for indicating an angle of the blade 116 with respect to the footplate 104. FIG. 2 shows the blade 116 in a first position in which the blade 116 is approximately orthogonal to the footplate 104, e.g., orthogonal to the bottom surface 304 of the footplate 104. Pivoting the footplate 104 from the orthogonal position results in the lever 224 moving along a slot 234 in the first plate 226 and allows the footplate 104 to be selectively positioned at an acute angle with respect to the blade 116.

Referring to FIGS. 3A-4, in the illustrated example, the footplate 104 also includes the channel 114 formed in the bottom surface 304 of the footplate 104 that is configured and dimensioned to be slidably disposed on the rail 112 formed in a top surface 404 of the guide track 102. Sides of the channel 114 are defined by a first wall 322 and a second wall 324. In the illustrated example, the channel 114 is located in a first side portion of the footplate 104 adjacent a first side 314 of the footplate 104, and in the illustrated example, directly adjacent the first side 314. In an example, the channel 114 is located adjacent or closely adjacent an outer extent of the footplate 104. The channel 114 extends from a front end 318 to a back end 320 of the footplate 104 and has a width, W_{c}, a height, H_{c}, and a length, L_{c}. The width, W_{c}, and height, H_{c}, of the channel are configured and dimensioned for sliding engagement with the rail 112 of the guide track 102. In the illustrated example, the footplate 104 includes only one channel 114. Having only one channel can be beneficial for a number of reasons. For example, only one channel 114 can reduce complexity because the user does not need to choose, learn, or remember which of multiple channels should be used for a given cutting operation. Having only one channel 114 as opposed to multiple channels also increases a remaining surface area of the bottom surface 304 of the footplate 104, which increases the stability provided by the footplate 104. Also, having only one channel 114 and locating the only one channel adjacent an outer extent of the footplate 104 can provide for a more space efficient footplate 104 and mating guide track 102 while maintaining a sufficiently large surface area of the bottom surface 304 to adequately support the circular saw 100. The illustrated footplate 104 is provided by way of example. Footplates of the present disclosure may include a single rail rather than a single channel that is configured to mate with one or more corresponding features, such as a mating channel of a guide track. Footplates of the present disclosure may also include two or more channels, two or more rails, and combinations of channels and rails or other features that may be designed and configured for sliding engagement with one or more features of a guide track.

In the illustrated example, the channel 114 is a fixed channel wherein a location of the channel on the footplate 104 is not adjustable and a dimension of the channel 114 is not adjustable. Footplates of the present disclosure may also include adjustable channels wherein a dimension and/or location of the channel may be adjusted. For example, a dimension of the channel or rail of the footplate may be adjustable to mate with a corresponding rail, channel, or other feature of a guide track. For example, a location of a channel or rail of a footplate may be adjustable to mate with a corresponding rail, channel, or other feature of a guide track.

In an example, the dimensions of the channel 114 may be designed and configured to provide optimum performance for a single channel 114 and a guide track 102 with a single-rail system that provides for an optimum balance of one or more of guiding performance, surface area support, and space efficiency. In an example, a ratio of the width, W_{c}, to the height, H_{c}, also referred to herein as an aspect ratio of the channel 114, may be between approximately 2 and approximately 2.5 and in some examples, between approximately 2.4 and approximately 2.5.

FIG. 4 is an end view of the guide track 102 showing the rail 112, which extends in a longitudinal direction along a length of the guide track 102 and stands proud of, or extends vertically from, the top surface 404 of the guide track 102. In an example, the rail 112 has a width, W_{R}, and a height, H_{R}, that may be designed and configured for sliding engagement with a channel of a footplate of a circular saw, such as channel 114 of the footplate 104. In an example, the dimension of the rail 112 may be designed and configured to provide optimum performance for a guide track 102 with a single-rail system that provides for an optimum balance of one or more of guiding performance, surface area support, and space efficiency. In an example, a ratio of the width, W_{R}, to the height, H_{R}, also referred to herein as an aspect ratio of the rail 112, may be between approximately 2 and approximately 2.5 and in some examples, between approximately 2.2 and approximately 2.3.

In an example, the guide track 102 includes the first portion 106 that extends from the first side 430 of the rail 112 to the first side 118 of the guide track 102. The guide track 102 may also include the second portion 110 that extends from a second side 432 of the rail 112 to the second side 120 of the guide track 102. The first portion 106 has a width, W₁, and the second portion 110 has a width, W₂. In an example, the width, W₁, of the first portion 106 is greater than the width, W₂, of the second portion 110. In an example, the width, W₁, is designed and configured for guiding and supporting a power tool, such as circular saw 100, when the saw is in a first cut orientation, such as an orthogonal cut orientation. In an example, the width, W₂, of the second portion 110 is less than the width, W₁, of the first portion 106 and is designed and configured for guiding and supporting a power tool, such as the circular saw 100, when the saw is in a second cut orientation that is different than the first cut orientation, such as a bevel cut orientation. In an example, the width, W₁, is designed, configured, and selected for guiding a circular saw in a first cut orientation, wherein the first cut orientation is an orthogonal cut orientation of approximately 90°. In an example, the width, W₂, is designed, configured, and selected for guiding a circular saw in a second cut orientation that is different than the first cut orientation, wherein the second cut orientation is a bevel cut orientation of between approximately 60° and approximately 30°. The illustrated guide track 102 is provided by way of example. Guide tracks of the present disclosure may include a single channel rather than a single rail that is configured to mate with one or more corresponding features, such as a mating rail of a power tool.

The guide track 102 may also include low-friction strips 414 disposed in the top surface 404 and extending in a longitudinal direction along a length of the guide track 102 for facilitating a sliding motion of the footplate 104 of the circular saw 100 along the guide track 102. The guide track 102 may also include anti-slip strips 416 disposed in a bottom surface 418 of the guide track 102 and extending in a longitudinal direction along a length of the guide track 102 for resisting a slipping or relative motion between the guide track 102 and a workpiece or other surface the guide track 102 is positioned on during use.

The example guide track 102 may also include a first guide lip 420a located below the first side 118 of the guide track 102 and a second guide lip 420b located below the second side 120 of the guide track 102. The guide lips 420a and 420b may be made of trimmable material such as a hard rubber. In an example, when new, the guide lips 420a and 420b are oversized to be wider than a distance between an inner surface of the blade 116 and the first side 118 or second side 120 of the guide track 102. A first cut with the blade 116 severs an outer margin of the corresponding guide lip 420a or 420b. What remains of the guide lip 420a or 420b is closely adjacent to or touches the blade 116. During use, a downward pressure at the guide lip 420a or 420b provides downward support adjacent the blade 116 which counteracts any tendency of an upward sweep of the rotating blade 116 to splinter the upper surface of the workpiece, which leads to a cleaner cut in the workpiece.

The rail 112 may be a fixed rail where a location of the rail on the guide track 102 is not adjustable and a dimension of the rail 112 is not adjustable. In the example, rail 112, the first portion 106, and the second portion 110 are a single unitary member formed from a rigid material such as a metal or polymer. One or more of the low-friction strips 414, the anti-slip strips 416, the guide lips 420a and 420b, or other components may be attached to the unitary member to form an example implementation of the guide track 102.

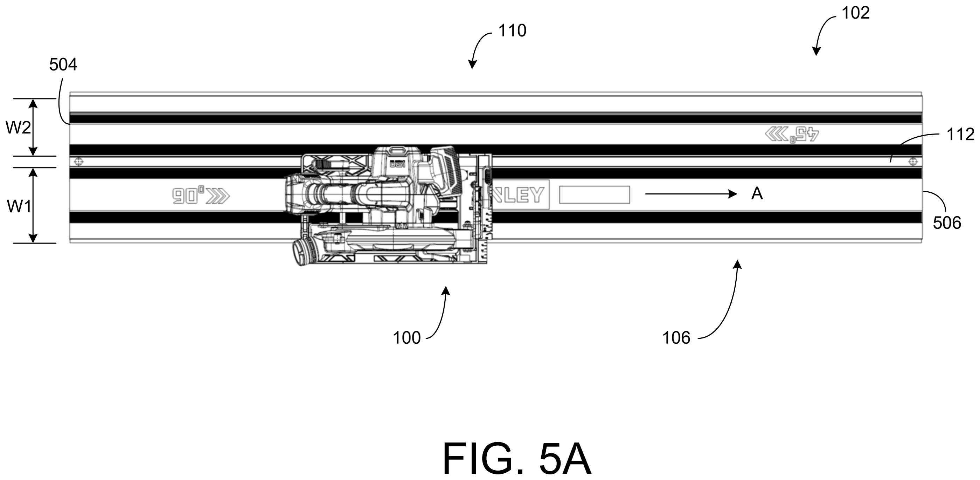

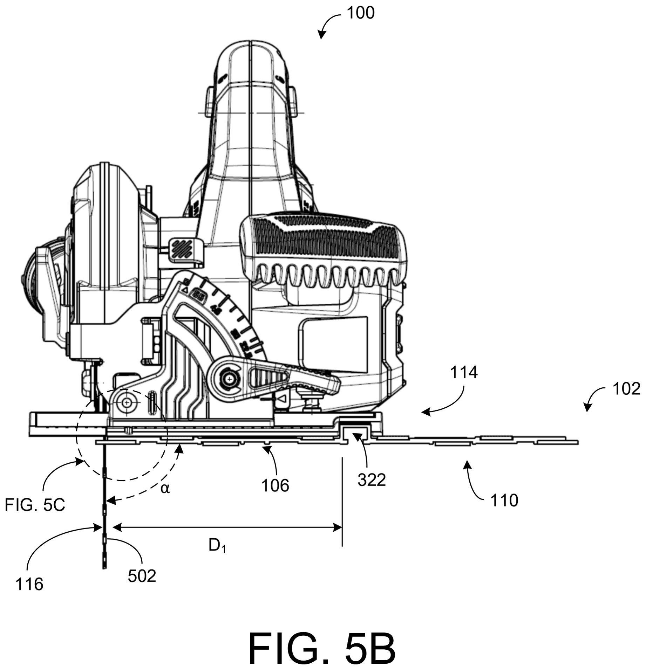

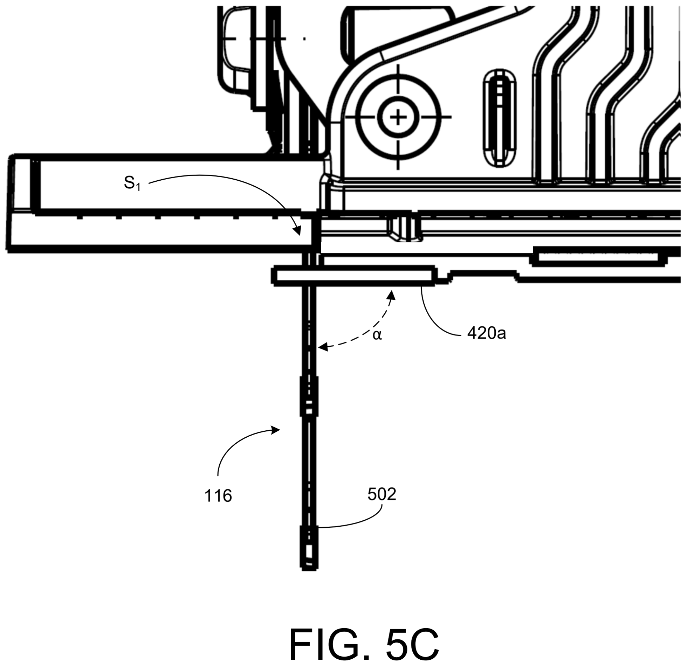

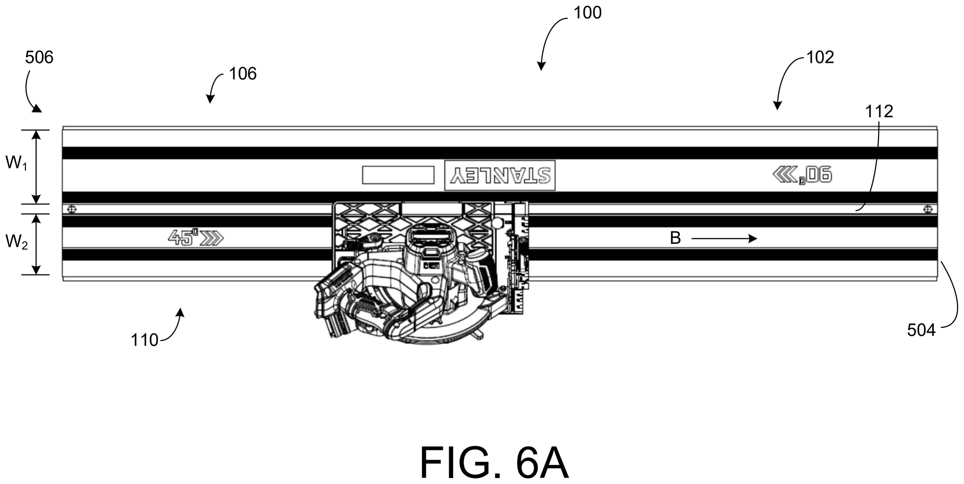

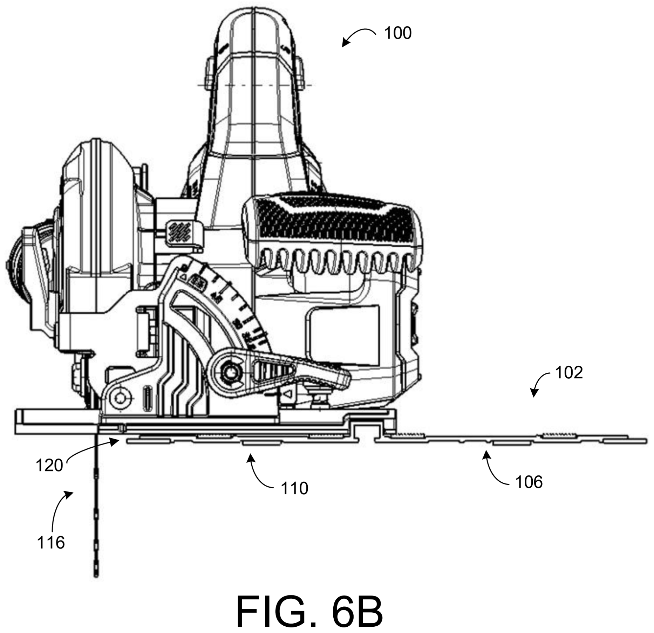

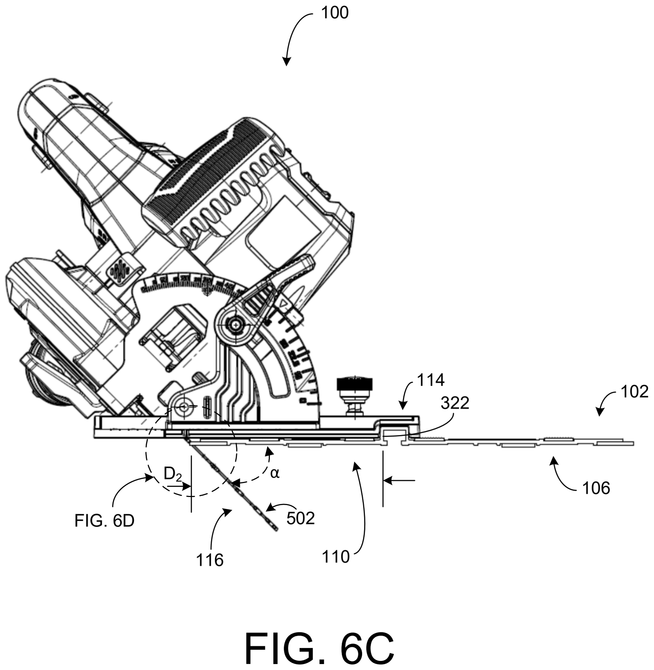

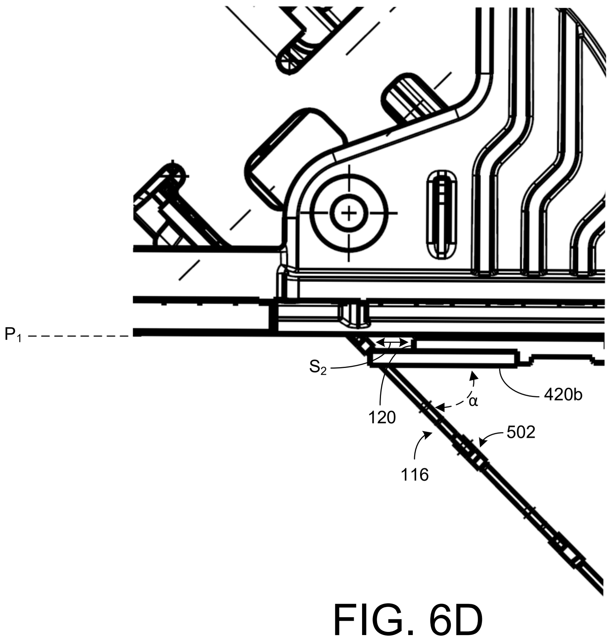

FIGS. 5A, 5B, and 5C are a top view, an end view, and a detail end view, respectively, of the circular saw 100 in an orthogonal cut orientation and positioned on the first portion 106 of the guide track 102. FIGS. 6A, 6B, 6C, and 6D are a top view, an end view with the circular saw 100 in an orthogonal cut orientation, an end view with the circular saw 100 in a bevel cut orientation, and a detail view of FIG. 6C respectively, of the circular saw 100 positioned on the second portion 110 of the guide track 102.

As illustrated in FIGS. 6B and 6C, a portion of the blade 116 below the track (cutting the workpiece) moves toward the rail 112 when the circular saw 100 is transitioned from the orthogonal cut orientation (FIG. 6B) to the bevel cut orientation (FIG. 6C), such that a distance between the portion of the blade 116 below the track and the channel 114 of the footplate 104 decreases as the angle α between the blade 116 and the footplate 104 decreases. In the illustrated example, the guide track 102 has two different sections with corresponding predetermined widths that correspond to the distance between the blade 116 and channel 114 when the circular saw 100 is in two different cut orientations.

The example guide track 102 may include the first portion 106, which has a width, W₁, that is designed and configured to operably support the circular saw 100 when the circular saw 100 is in a first cut orientation, for example, the orthogonal cut orientation. And the second portion 110, which has a width, W₂, is designed and configured to operably support the circular saw 100 when the circular saw 100 is in a second cut orientation, for example, the bevel cut orientation. The width, W₂, of the second portion 110 is less than the width W₁, of the first portion 106 which allows or enables the circular saw 100 to rotate about the pivot connections 213 without the track interfering with the blade. For example, as shown in FIGS. 5B and 5C, when the circular saw 100 is positioned on the first portion 106 of the guide track 102, the blade 116 is closely adjacent the first side 118 of the guide track 102. If the circular saw 100 was pivoted to a bevel cut orientation from the position shown in FIGS. 5B and 5C, the blade 116 would hit the first side 118 and the guide track 102 would interfere with the circular saw 100 angle adjustment. Thus, the second portion 110 is narrower than the first portion 106 to provide additional spacing to allow for the rotational movement of the portion of the blade 116 below the guide track 102 towards the rail 112. FIGS. 6A-6D show the guide track 102 rotated 180° (relative to FIGS. 5A-5C) and the circular saw 100 positioned on the second portion 110 of the guide track 102 while the circular saw 100 is still in the orthogonal cut orientation. A comparison of FIGS. 5B and 6B illustrates the reduced width of the second portion 110, where the spacing between the blade 116 and the second side 120 shown in FIG. 6B is greater than the spacing between the blade 116 and the first side 118 shown in FIG. 5B. In the illustrated example, the increased spacing resulting from the narrower width, W₂, (FIG. 4) of the second portion 110 as compared to the width, W₁ (FIG. 4) of the first portion 106, provides the spacing for the portion of the blade 116 below the guide track 102 to rotate toward the rail 112 without the guide track 102 interfering with the blade 116. FIGS. 6C and 6D show the circular saw 100 positioned on the second portion 110 and transitioned to the bevel cut orientation. A comparison of FIG. 6B to FIGS. 6C and 6D show how the spacing between the blade 116 and the second side 120 reduces when the bevel angle of the circular saw 100 is changed.

FIG. 5A is a top down view of the circular saw 100 in use in the orthogonal cut orientation to perform an orthogonal cut operation. The circular saw 100 is positioned on the first portion 106 of the guide track 102 with the channel 114 of the footplate 104 positioned on the rail 112. During a cutting operation, the circular saw 100 is slid across the first portion 106 in the direction of the arrow A, from a first end 504 of the guide track 102 to a second end 506 of the guide track 102. The sliding between the channel 114 and the rail 112 enables a user to make a substantially straight cut along a workpiece by sliding the footplate 104 along the rail 112.

FIG. 6A is a top down view of the circular saw 100 in use in the bevel cut orientation to perform a bevel cut operation. The guide track 102 has been rotated 180° (relative to FIG. 5A) and the circular saw 100 is positioned on the second portion 110 of the guide track 102 with the channel 114 of the footplate 104 positioned on the rail 112. During a cutting operation, the circular saw 100 is slid across the second portion 110 of the guide track 102 in the direction of the arrow B, from the second end 506 to the first end 504 of the guide track.

The guide track 102 and footplate 104 provide for a simple and efficient system to make straight cuts in either the orthogonal cut orientation or the bevel cut orientation. In an example, the footplate 104 may include only one channel 114 and the guide track 102 may include only one rail 112. Having only one of each of the channel 114 and rail 112 can provide a number of advantages, such as simplicity, improved performance, and reduced manufacturing costs. For example, no adjustment of the guide track 102 or the footplate 104 is needed (other than changing the angle of the blade 116) to switch between orthogonal and bevel cuts. Also, a user does not need to choose between multiple channels in the footplate 104 and/or multiple rails in the guide track 102 according to a chosen cut orientation. Instead, a user can simply place the circular saw 100 on the first portion 106 of the guide track 102 adjacent the first end 504 to make an orthogonal cut or rotate the guide track 102 or circular saw 100 180° and place the circular saw 100 on the second portion 110 adjacent the second end 506 to make a bevel cut.

In the illustrated example, an inner surface 502 of the blade 116 is spaced a first distance, D₁, from the first wall 322 of the channel 114 when the circular saw 100 is in the orthogonal cut orientation (FIG. 5B). The inner surface 502 is spaced a second distance, D₂, from the first wall 322 of the channel 114 when the circular saw 100 is in the bevel cut orientation, in the example shown in FIG. 6C, approximately 45°. In an example, the distance, D₂, is measured in a plane, P₁, (FIG. 6D) defined at the interface between the bottom surface 304 of the footplate 104 and a top surface of the guide track 102 with which the bottom surface 304 of the footplate 104 is in sliding contact.

In an example, the width, W₁, (FIG. 4) of the first portion 106 of the guide track 102 is designed and configured to position the blade 116 of the circular saw 100 adjacent or closely adjacent the first side 118 of the guide track 102 when the circular saw 100 is positioned on the first portion 106 of the guide track 102 in the orthogonal cut orientation. For example, the width, W₁, may be approximately equal to the distance, D₁. In an example, the width, W₁, may be approximately equal to the distance, D₁ minus a predetermined spacing, S_{1,}(FIG. 5C), between the inner surface 502 of the blade 116 and the first side 118 of the guide track 102. In some examples the predetermined spacing, S₁, may be between approximately 0% and approximately 100% of a width of the guide lip 420a, and in some examples, between approximately 0% and approximately 50% of a width of the guide lip 420a, and in some examples, between approximately 0% and approximately 20% of a width of the guide lip 420a, and in some examples, between approximately 0% and approximately 10% of a width of the guide lip 420a. In some examples the predetermined spacing, S₁, may be between approximately 0.1 mm and approximately 10 mm, and in some examples, between approximately 0.1 mm and approximately 5 mm.

In an example, the width, W₂, (FIG. 4) of the second portion 110 of the guide track 102 is designed and configured to position the blade 116 of the circular saw 100 adjacent or closely adjacent the second side 120 of the guide track 102 when the circular saw 100 is positioned on the second portion 110 of the guide track 102 in the bevel cut orientation. For example, the width, W₂, may be approximately equal to the distance, D₂ (FIG. 6C). In an example, the width, W₂, may be approximately equal to the distance, D₂, minus a predetermined spacing, S₂, (FIG. 6D) between the inner surface 502 of the blade 116 and the second side 120 of the guide track 102. In some examples the predetermined spacing, S₂, may be between approximately 0% and approximately 100% of a width of the guide lip 420b, and in some examples, between approximately 0% and approximately 50% of a width of the guide lip 420b, and in some examples, between approximately 0% and approximately 20% of a width of the guide lip 420b, and in some examples, between approximately 0% and approximately 10% of a width of the guide lip 420b. In some examples the predetermined spacing, S₂, may be between approximately 0.1 mm and approximately 10 mm, and in some examples, between approximately 0.1 mm and approximately 5 mm.

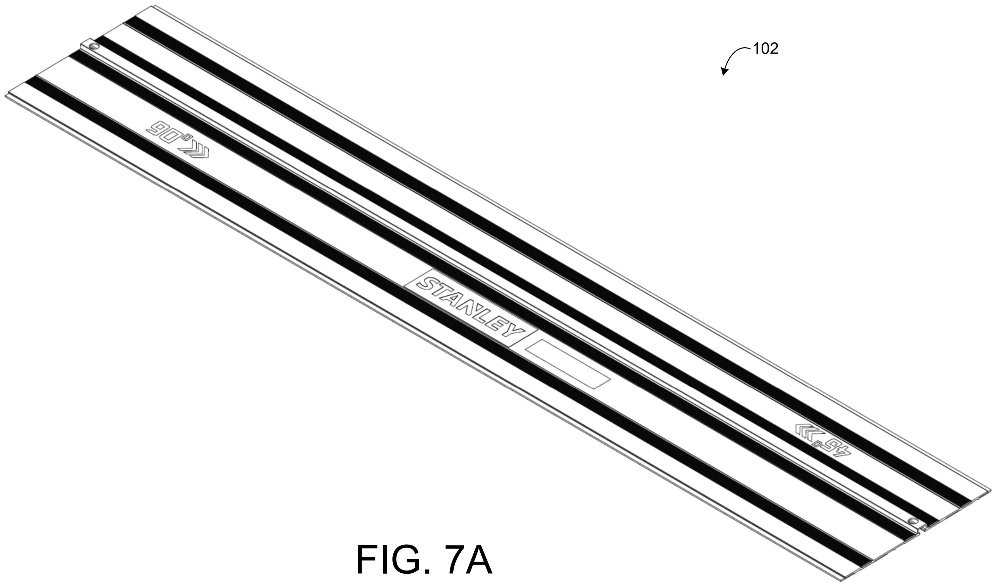

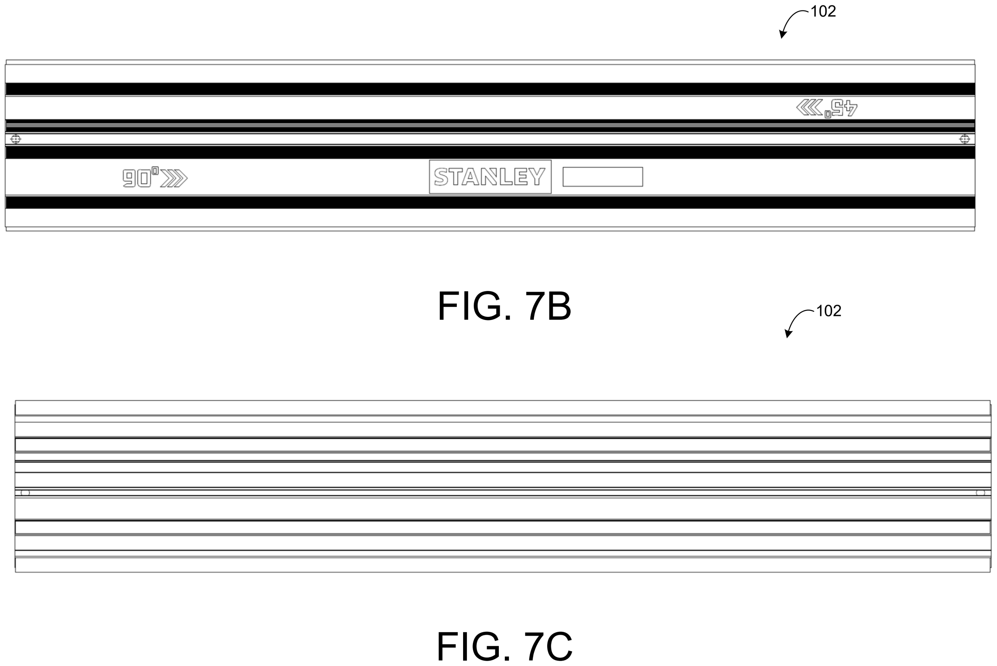

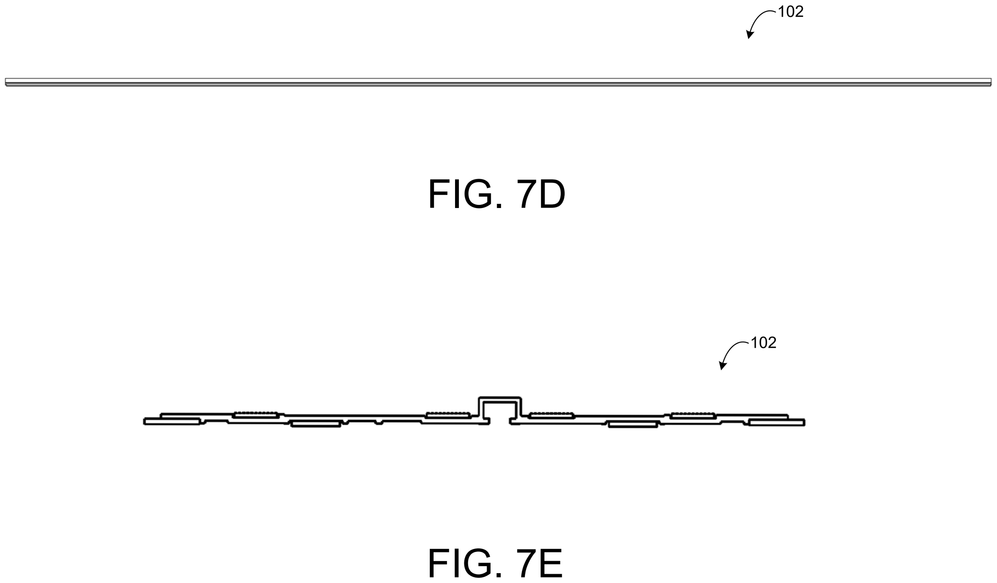

FIG. 7A is an isometric view of the guide track 102 of FIGS. 1A and 1B. FIGS. 7B, 7C, 7D, and 7E are a top view, bottom view, side view and end view, respectively, thereof.

The terminology used herein is for the purpose of describing particular example implementations only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example implementations.

Terms of degree such as "generally," "substantially," "approximately," and "about" may be used herein when describing the relative positions, sizes, dimensions, or values of various elements, components, regions, layers and/or sections. These terms mean that such relative positions, sizes, dimensions, or values are within the defined range or comparison (e.g., equal or close to equal) with sufficient precision as would be understood by one of ordinary skill in the art in the context of the various elements, components, regions, layers and/or sections being described.

While certain features of the described implementations have been illustrated as described herein, many modifications, substitutions, changes and equivalents will now occur to those skilled in the art. It is, therefore, to be understood that the appended claims are intended to cover all such modifications and changes as fall within the scope of the implementations.
It should be understood that they have been presented by way of example only, not limitation, and various changes in form and details may be made. Any portion of the apparatus and/or methods described herein may be combined in any combination, except mutually exclusive combinations. The implementations described herein can include various combinations and/or sub-combinations of the functions, components and/or features of the different implementations described.

## Claims

1. A guide track, comprising:
a rail configured and dimensioned to slidably engage a channel in a footplate of a power tool for guiding the power tool in a linear direction;
a first portion having a first width that extends from a first side of the guide track to the rail; and
a second portion having a second width that extends from a second side of the guide track to the rail;
wherein:
the first width is configured to position a saw blade of the power tool adjacent the first side of the guide track when the power tool is in a first cut orientation and positioned on the first portion of the guide track; and
the second width is less than the first width and is configured to position the saw blade adjacent the second side of the guide track when the power tool is in a second cut orientation and is positioned on the second portion of the guide track.

2. The guide track of claim 1, wherein the first cut orientation is an orthogonal cut orientation and the second cut orientation is a bevel cut orientation.

3. The guide track of claim 1, wherein the rail is a single rail on the guide track and the guide track is configured to guide a saw with a footplate with only one channel.

4. The guide track of claim 1, wherein the rail, the first portion, and the second portion are a unitary member.

5. The guide track of claim 1, wherein the rail is fixed and is not adjustable.

6. The guide track of claim 1, wherein a ratio of a width to a height of the rail is between approximately 2 and approximately 2.5.

7. A system, comprising:
the guide track according to any of the preceding claims; and
a power tool comprising:
a rotary saw blade;
a footplate that includes a channel that extends along a length of the footplate; and
an angle adjustment assembly for adjusting an angle of the footplate with respect to the rotary saw blade between a first cut orientation and a second cut orientation that is different than the first cut orientation.

8. The system of claim 7, wherein the channel is the only channel in the footplate for coupling to the rail of the guide track.

9. The system of claim 7 or 8, wherein the rotary saw blade is spaced a first distance from the channel when the power tool is in the first cut orientation and is spaced a second distance from the channel that is less than the first distance when the power tool is in the second cut orientation, wherein the first width of the first portion of the guide track is equal to the first distance minus a first predetermined spacing and the second width of the second portion of the guide track is equal to the second distance minus a second predetermined spacing.

10. The system of claim 9, wherein the first predetermined spacing is between approximately 0.1 mm and approximately 10 mm.

11. A method, comprising:
positioning a power tool on a first portion of a guide track when the power tool is in a first cut orientation so that a channel of a footplate of the power tool is slidably disposed on a rail of the guide track and a rotary blade of the guide track is directly adjacent a first side of the guide track;
performing a cutting operation by powering the rotary blade and sliding the power tool in a first direction along the first portion of the guide track;
positioning the power tool on a second portion of the guide track when the power tool is in a second cut orientation so that the channel of the footplate of the power tool is slidably disposed on the rail of the guide track and the rotary blade of the guide track is directly adjacent a second side of the guide track; and
performing a cutting operation by powering the rotary blade and sliding the power tool in a second direction that is opposite the first direction along the second portion of the guide track.

12. The method of claim 11, wherein the first cut orientation is an orthogonal cut orientation and the second cut orientation is a bevel cut orientation.

13. The method of claim 11 or 12, wherein the rail is a single rail on the guide track and the channel is the only channel in the footplate for coupling to the rail of the guide track.

14. The method of any of claims 11 to 13, wherein the rail, the first portion, and the second portion are a unitary member.

15. The method of any of claims 11 to 14, wherein:
the rail is fixed and is not adjustable; and/or
a ratio of a width to a height of the rail is between approximately 2 and approximately; and/or
the first portion is wider than the second portion.
